# EUROPÄISCHE PATENTSCHRIFT

(11) **EP 1 182 723 B1**
(45) Veröffentlichungstag und Bekanntmachung des Hinweises auf die Patenterteilung: **26.04.2006**
(21) Anmeldenummer: 01117454.7
(22) Anmeldetag: 18.07.2001
(51) Int. Cl.: H01M 8/06, H01M 8/04

(54) **Verfahren zur Regelung eines Brennstoffzellensystems mit einem Reformer**
Method of controlling a fuel cell system with reformer
Procédé pour contrôler un système de piles à combustible avec réformeur

(30) Priorität: 23.08.2000 DE 10041457
(43) Veröffentlichungstag der Anmeldung: 27.02.2002
(73) Patentinhaber: ROBERT BOSCH GMBH, 70442 Stuttgart (DE)
(72) Erfinder: Christen, Andreas, 35469 Allendorf (DE); Wieland, Steffen, Dr., 74080 Heilbronn (DE)

(56) Entgegenhaltungen:
- EP-A- 0 973 220
- PATENT ABSTRACTS OF JAPAN vol. 012, no. 217 (E-624), 21. Juni 1988 (1988-06-21) & JP 63 013277 A (FUJI ELECTRIC CO LTD), 20. Januar 1988 (1988-01-20)
- PATENT ABSTRACTS OF JAPAN vol. 010, no. 263 (E-435), 9. September 1986 (1986-09-09) & JP 61 088461 A (FUJI ELECTRIC CO LTD), 6. Mai 1986 (1986-05-06)
- PATENT ABSTRACTS OF JAPAN vol. 013, no. 468 (E-834), 23. Oktober 1989 (1989-10-23) & JP 01 183073 A (FUJI ELECTRIC CO LTD), 20. Juli 1989 (1989-07-20)

## Beschreibung

Die Erfindung betrifft ein Verfahren zur Regelung eines Brennstoffzellensystems nach dem Oberbegriff des Patentanspruches 1.

Brennstoffzellen wandeln Wasserstoff oder kohlenwasserstoffhaltige Brennstoffe direkt in elektrischen Strom um. Die dabei entstehende Wärme kann für Beheizungszwecke genutzt werden. Als Brennstoff für die Brennstoffzelle wird wasserstoffreiches Synthesegas aus einem Kohlenwasserstoff erzeugt. Unter Zugabe von Luft und Wasser erfolgt dies in einem Reformer, welcher im wesentlichen aus einem Katalysatorkörper besteht.

Bekannt ist aus der DE 199 47 880 A1 das Regeln der Temperatur im Reformer durch die Zufuhr von inertem Wasser oder - wie in der EP 0 973 220 A2 vorgeschlagen - durch die dosierte Zugabe von Luft und Wasser. Die Oxidation ist exotherm und treibt die endotherme Wasserdampfreformierung an. Als Regelgröße wird dabei die Temperatur angesehen. In der DE 197 07 814 C1 ist die Zufuhr von wasserstoffreichern Reformat in eine Brennstoffzelle in Abhängigkeit von seiner Qualität beschrieben. Weiterhin enthalten die EP 0 978 476 A1 und die EP 0 973 219 A2 die Regelung der Temperatur des Reformers während des Betriebes.

Während des An- und Abfahrprozesses können allerdings im Reformer auch Gase entstehen, die für die nachgeschaltete Brennstoffzelle schädlich sind. Außerdem kann bei der Reformierung Ruß entstehen, der sich in die Poren des Katalysators setzt und das Reaktionsverhalten negativ beeinflusst. Wenn der Katalysator bzw. das durchströmende Gas unter den Taupunkt abgekühlt werden, kann sich möglicherweise auch Feuchtigkeit in diesen Poren festsetzen, so dass eine erneute Erwärmung dann eventuell zu einer mechanischen Zerstörung des Katalysatörkörpers führt.

Dazu ist aus der JP-A-63013277 ein Verfahren zur Regelung eines Brennstoffzellensystems bekannt, wobei dem der Reformer beim Anfahrvorgang mit Luft gespült wird und das produzierte Abgas an der nachgeschalteten Brennstoffzelle vorbei geleitet wird. Weiterhin offenbart die JP-A-61088461 ein Verfahren, bei dem Wasser auch beim Abfahrvorgang eines Brennstoffzellensystems einem Reformer zugeführt wird.

Erfindungsgemäß wird dies mit den Merkmalen des Patentanspruches 1 gelöst. Vorteilhafte Weiterbildungen sind den Unteransprüchen zu entnehmen.

Das Verfahren zur Regelung eines Brennstoffzellensystems ist dadurch gekennzeichnet, dass der Reformer beim An- und Abfahrvorgang mit Luft gespült wird und das produzierte Synthesegas bzw. Abgas in dieser Betriebsphase - zumindest teilweise - an der nachgeschalteten Brennstoffzelle vorbei geleitet wird.

Beim Anfahrvorgang im Reformer werden Reaktionsrückstände und Feuchtigkeit zunächst durch Spülen mit Luft entfernt. Danach wird der Verbrennungsprozess mit einer vollständigen Verbrennung von Brennstoff und Luft eingeleitet. Das dabei entstehende heiße Abgas erwärmt nachgeschaltete Komponenten des Reformers sowie Gasaufbereitungsstufen und einen Nachbrenner, der beispielsweise zusätzlich mit Brennstoff, Synthesegas und Luft beaufschlagt wird. Erst ab dem Erreichen der optimalen Reaktionstemperatur wird die Luft-, Brennstoff- und/oder Wassermenge nach den festgelegten Erfordernissen der partiellen Oxidation oder der autothermen Reformierung geregelt, um eine vollständige Umsetzung zu erzielen. Die optimale Reaktionstemperatur gilt dabei als erreicht, sobald der Reaktor einen gewissen vordefinierten Umsatz erreicht hat.

Während des Anfahrvorganges im Reformer wird das - zumindest teilweise - an der Brennstoffzelle vorbeigeleitete Synthesegas bzw. Abgas in einem nachgeschalteten, vorzugsweise katalytischen Brenner umgesetzt. Zum Schutz der Brennstoffzelle bzw. zur Aufrechterhaltung der dort ablaufenden Reaktionen reicht es eventuell schon aus, nur einen Teilstrom an der Brennstoffzelle vorbeizuleiten, um damit den Schadstoffeintrag zu begrenzen.

Beim Abfahren des Reformers wird sofort die Brennstoffzufuhr unterbrochen und weiterhin Luft und Wasser zugeführt. Diese Luft- und Wassermenge wird in Abhängigkeit der Reaktionsbedingungen allmählich reduziert. Mit einer entsprechenden Dosierung der eingebrachten Luft können im Reformer während dieser Phase mögliche Rußablagerungen im Bereich des Katalysators abgebrannt werden. Dabei dient Wasserdampf als Moderator und die Wasserzufuhr wird vorzugsweise erst unterbrochen, wenn die Temperatur im Reformer gleich bleibt oder fällt. Zur Trocknung des Katalysatorkörpers im Reformer wird danach die Luftzufuhr noch fortgesetzt. Die Luftmenge kann allerdings reduziert werden.

Mit der Erfindung wird ein einfaches Regelverfahren für einen Reformer bzw. für ein Brennstoffzellensystem als Gesamteinheit geschaffen, mit dem auch die bisher relativ aufwändig mit Regeltechnik zu erfassenden An- und Abfahrvorgänge berücksichtigt sind. Durch die Überwachung von wenigen, einfach zu messenden Parametern, wie zum Beispiel Temperaturen, kann die Funktion des Brennstoffzellensystems sichergestellt werden und parallel dazu können keine schädlichen Stoffe in die empfindliche Brennstoffzelle gelangen. Auch der Reformer besitzt nun eine größere Robustheit. Er ist unempfindlicher gegen sich bildende Reaktionsrückstände und Feuchtigkeit, weil der Katalysator von Ruß befreit bzw. mit Luft gespült werden kann.

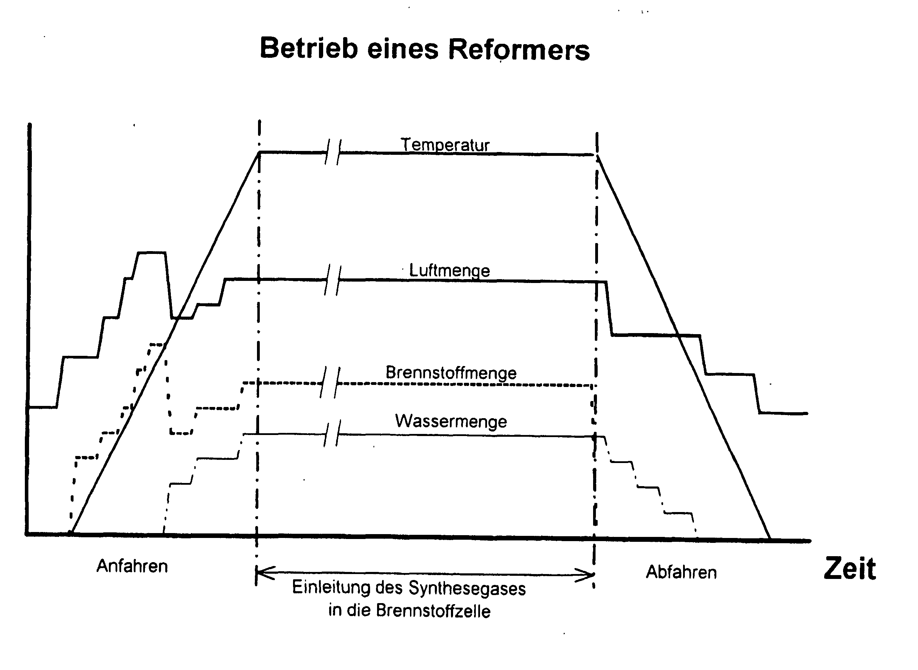

Die Zeichnung stellt ein Ausführungsbeispiel der Erfindung dar und zeigt in einer einzigen Figur das charakteristische, schematisch gezeichnete Betriebsverhalten eines Reformers. Es besteht hauptsächlich aus einer An- und Abfahrphase sowie einer stationären Betriebsphase, während der das im Reformer erzeugte Synthesegas in der optimalen Konzentration zur Verfügung steht und vollständig in die nachgeschaltete Brennstoffzelle eingeleitet wird. Dargestellt ist dabei im Ausführungsbeispiel ein geradliniger Verlauf der Werte. Bedingt durch das Reaktionsverhalten sowie unterschiedliche Leistungsanforderungen bzw. Synthesegasabnahmen können diese allerdings auch schwanken.

Beim Anfahren des Reformers erfolgt in der ersten Phase ein Spülen mit Luft. Danach wird der Verbrennungsprozess für Brennstoff und Luft am Katalysator eingeleitet und so weit gesteigert, bis die Reaktionstemperatur für eine partielle Oxidation ausreicht. Erst jetzt wird Wasser zugegeben, weil es dann mit der erzeugten Wärme verdampft werden kann. Die Luftmenge wird gleichzeitig reduziert, bis eine Produktion von Wasserstoff stattfindet. Das heißt, die Regelung der Luft- und Brennstoffmenge erfolgt spätestens ab diesem Zeitpunkt in Abhängigkeit aller an der partiellen Oxidation beteiligten Reaktionspartner. Während des gesamten Anfahrvorganges im Reformer wird das produzierte Synthesegas bzw. Abgas - zumindest teilweise - an der Brennstoffzelle vorbeigeleitet und in einem nachgeschalteten Brenner umgesetzt.

Beim Abfahren des Reformers wird sofort die Brennstoffzufuhr unterbrochen und das Synthesegas bzw. Abgas ab diesem Zeitpunkt über einen Bypass um die Brennstoffzelle geleitet. Es kann ebenfalls noch in einem nachgeschalteten Brenner umgesetzt werden und wird vorzugsweise an Wärmetauschern abgekühlt. Luft und Wasser werden weiterhin in den Reformer eingebracht, wobei die jeweilige Menge in Abhängigkeit der Reaktionsverhältnisse allmählich reduziert wird. Mit einer entsprechenden Dosierung der zugeführten Luft ist es während dieser Phase möglich, Rußablagerungen im Bereich des Katalysators abzubrennen. Da diese Verbrennung stark exotherm ist, dient Wasserdampf dabei als Moderator. Die thermische Trägheit des Systems erlaubt selbst ohne Wärmezufuhr das Verdampfen des Wassers. In Abhängigkeit von der Temperatur des Katalysators im Reformer läßt sich die Wasserzufuhr weiter reduzieren oder ganz unterbrechen. Luft wird dagegen weiterhin zugeführt. Sie dient zum Abführen von feuchtem Komponenten und somit zur Trocknung des Katalysatorkörpers im Reformer.

## Patentansprüche

1. Verfahren zur Regelung eines Brennstoffzellensystems, mit einem Reformer zur Herstellung eines wasserstoffreichen Synthesegases aus einem wasserstoffreichen Brennstoff unter Zugabe von Luft und Wasser, insbesondere durch partielle Oxidation oder autotherme Reformierung, wobei der Reformer beim An- und Abfahrvorgang mit Luft gespült wird und das produzierte Synthesegas bzw. Abgas - zumindest teilweise - an der nachgeschalteten Brennstoffzelle vorbei geleitet wird,
**dadurch gekennzeichnet, dass** beim Anfahrvorgang im Reformer, nach dem Spülen mit Luft, der Verbrennungsprozess mit einer vollständigen Verbrennung von Brennstoff und Luft eingeleitet wird und dass erst ab dem Erreichen der optimalen Reaktionstemperatur, sobald die die Wärme ausreicht, um in den Reformer eingebrachtes Wasser zu verdampfen, die Luft-, Brennstoff- und/oder Wassermenge nach den festgelegten Erfordernissen der partiellen Oxidation oder der autothermen Reformierung geregelt wird.

2. Verfahren nach Anspruch 1,
**dadurch gekennzeichnet, dass** das während des Anfahrvorganges im Reformer - zumindest teilweise - an der Brennstoffzelle vorbeigeleitete Synthesegas bzw. Abgas in einem nachgeschalteten, vorzugsweise katalytischen Brenner umgesetzt wird.

3. Verfahren nach Anspruch 1 oder 2,
**dadurch gekennzeichnet, dass** beim Abfahren zunächst die Brennstoffzufuhr zum Reformer unterbrochen und weiterhin Luft und Wasser zugeführt wird.

4. Verfahren nach einem der Ansprüche 1 bis 3,
**dadurch gekennzeichnet, dass** beim Abfahren des Reformers die eingebrachte Luft- und Wassermenge in Abhängigkeit der Reaktionsbedingungen reduziert wird.

5. Verfahren nach einem der Ansprüche 1 bis 4,
**dadurch gekennzeichnet, dass** beim Abfahren des Reformers Rußablagerungen im Bereich des Katalysators durch eine entsprechende Dosierung der eingebrachten Luft abgebrannt werden und dabei Wasserdampf als Moderator dient.

6. Verfahren nach einem der Ansprüche 1 bis 5,
**dadurch gekennzeichnet, dass** die Wasserzufuhr beim Abfahren des Reformers unterbrochen wird, sobald die Temperatur im Reformer gleich bleibt oder fällt, und dass die Luft zur Trocknung danach weiter zugeführt wird.

## Claims

1. A method for regulating a fuel cell system, comprising a reformer for producing hydrogen-rich synthesis gas from a hydrogen-rich fuel whilst adding air and water, especially by partial oxidation or autothermal reforming, wherein the reformer is flushed with air during the start-up and shutdown process and the synthesis gas or waste gas produced is guided, at least partly, past the fuel cell located downstream,
**characterised in that** during the start-up process in the reformer, after flushing with air, the combustion process is initiated with complete combustion of fuel and air and that only after reaching the optimal reaction temperature, as soon as the heat is sufficient to vaporise the water introduced into the reformer is the amount of air, fuel and/or water regulated according to the specified requirements of partial oxidation or autothermal reforming.

2. The method according to claim 1,
**characterised in that** during the start-up process in the reformer, the synthesis gas or waste gas fed, at least partly, past the fuel cell, is converted in a downstream, preferably catalytic burner.

3. The method according to claim 1 or 2,
**characterised in that** during shut-down at least the fuel supply to the reformer is interrupted and air and water continues to be supplied.

4. The method according to any one of claims 1 to 3,
**characterised in that** when shutting down the reformer, the quantity of air and water introduced is reduced as a function of the reaction conditions.

5. The method according to any one of claims 1 to 4,
**characterised in that** when shutting down the reformer, soot deposits in the area of the catalyst are burnt off by a corresponding dosing of the supplied air and at the same time water vapour serves as a moderator.

6. The method according to any one of claims 1 to 5,
**characterised in that** when shutting down the reformer, the water supply is interrupted as soon as the temperature in the reformer stays the same or drops and that the air for drying is then further supplied.

## Revendications

1. Procédé de régulation d'un système de pile à combustible, comprenant un reformeur pour générer un gaz de synthèse riche en hydrogène à partir d'un combustible riche en hydrogène en ajoutant de l'air et de l'eau, notamment par oxydation partielle ou reformage autotherme, dans lequel le reformeur est soufflé à l'air lors du processus de démarrage et de départ et on fait passer le gaz de synthèse ou gaz d'échappement produit -du moins partiellement- devant la pile à combustible montée en aval,
**caractérisé en ce que**, lors du processus de démarrage dans le reformeur, après le soufflage à l'air, le processus de combustion est engagé avec une combustion complète du combustible et de l'air et que c'est seulement une fois que la température de réaction optimale est atteinte, dès que la chaleur est suffisante pour vaporiser l'air introduite dans le reformeur, que la quantité d'air, de combustible et/ou d'eau est régulée en fonction des besoins fixés de l'oxydation partielle ou du reformage autotherme.

2. Procédé selon la revendication 1,
**caractérisé en ce que** le gaz de synthèse ou gaz d'échappement qu'on fait passer pendant le processus de démarrage dans le reformeur devant la pile à combustible est -au moins partiellement-transformé dans un brûleur, de préférence catalytique, monté en aval.

3. Procédé selon la revendication 1 ou 2,
**caractérisé en ce que**, lors du démarrage, on interrompt d'abord l'alimentation en combustible du reformeur et qu'on continue à apporter de l'air et de l'eau.

4. Procédé selon une des revendications 1 à 3,
**caractérisé en ce que**, lors du démarrage du reformeur, la quantité d'air et d'eau introduite est réduite en fonction des conditions de réaction.

5. Procédé selon une des revendications 1 à 4,
**caractérisé en ce que**, lors du démarrage du reformeur, les dépôts de suie au niveau du catalyseur sont brûlés par un dosage correspondant de l'air introduit et que la vapeur d'eau sert alors de modérateur.

6. Procédé selon une des revendications 1 à 5,
**caractérisé en ce que** l'alimentation en eau est interrompue lors du démarrage du reformeur dès que la température reste constante ou baisse dans le reformeur et que l'air est ensuite acheminé plus loin pour être séché.
